# EUROPÄISCHE PATENTANMELDUNG

(11) **EP 4 148 605 A1**
(43) Veröffentlichungstag der Anmeldung: **15.03.2023**
(21) Anmeldenummer: 21196317.8
(22) Anmeldetag: 13.09.2021
(51) Int. Cl.: G06F 21/53, G06F 9/455, G06F 11/30, G06F 21/64

(54) **AUSFÜHREN VON PRIVILEGIERTEN OPERATIONEN IN EINEM CONTAINER**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Verfahren zum Ausführen von privilegierten Operationen eines in einem Container auf einem Gastrechner (10) ausgeführten Anwendungsprogramms, bei der zum Ausführen der privilegierten Operation in Bezug auf nicht-privilegierte Operationen des Anwendungsprogramms eine erweiterte Ausführungsberechtigung für den Container auf einem Gastrechner (10) erforderlich sind, umfassend
- Empfangen (S1) einer mindestens eine privilegierte Operation enthaltende Privilegierungsrichtline (R) beim Starten eines Hauptcontainers (18) in einem Gastrechner (10),
- Überwachen (S2) von aufgerufenen Operationen des Anwendungsprogramms, die in dem Hauptcontainer (18) ausgeführt werden, durch eine Laufzeitumgebung (13) des Gastrechners (10),
- Starten (S3) eines separaten, die erweiterte Ausführungsberechtigung umfassenden Nebencontainers (19), wenn eine in der Privilegierungsrichtlinie (R) enthaltene privilegierte Operation innerhalb des Hauptcontainers (18) aufgerufen wird,
- Ausführen (S4) der privilegierten Operation im Nebencontainer (18) stellvertretend für den Hauptcontainer (18),
- Beenden (S5) des Nebencontainers (19) nach Ausführung der privilegierten Operation, und
- Weiterführen (S6) des Hauptcontainers (18) abhängig von einer Rückmeldung des Nebencontainers (19) und/oder der Privilegierungsrichtlinie (R).

## Beschreibung

Die Erfindung betrifft Verfahren zum Ausführen von privilegierten Operationen eines in einem Container auf einem Gastrechner ausgeführten Anwendungsprogramms, bei dem zum Ausführen der privilegierten Operation in Bezug auf nicht-privilegierte Operationen des Anwendungsprogramms eine erweiterte Zugriffsberechtigung für den Container auf dem Gastrechner erforderlich sind.

Containervirtualisierung ist eine Methode, bei der mehrere Instanzen eines Betriebssystems isoliert voneinander einen Betriebssystemkern eines Gastrechners nutzen können. Software Container, im Weiteren kurz Container genannt, stellen somit eine leichtgewichtige Art der Virtualisierung einer Laufzeitumgebung auf einem Gastrechner, auch Hostsystem genannt, dar und kapseln eine in einem Container betriebene Applikation vom darunterliegenden Hostsystem ab. Applikationen werden mittlerweile in vielen Bereichen wie beispielsweise der Industrieautomation und der Prozesssteuerung, aber auch für Anwendungen in Transportsystemen oder Fahrzeugen mittels Container implementiert.

Um einen Container auf dem Hostsystem starten zu können, wird ein Containerabbild benötigt, welches neben der Applikationssoftware, auch Anwendungsprogramm genannt, auch die für die Applikationssoftware erforderlichen Binärprogramme und Bibliotheken enthält. Aus dem Containerabbild wird auf dem Hostsystem ein Container, genauer eine Containerinstanz, erstellt und auf der Laufzeitumgebung ausgeführt. Bei Bedarf, beispielsweise bei einem verstärkten Aufruf der Applikation durch Nutzer, können aus dem gleichen Containerabbild weitere Containerinstanzen auf dem gleichen oder einem anderen Hostsystem erzeugt und ausgeführt werden. Im Weiteren wird die Containerinstanz synonym als Container bezeichnet. Herkömmlicherweise werden Containerinstanzen mit Hilfe einer Laufzeitumgebung wie beispielsweise "Docker" auf dem Hostsystem, das gegebenenfalls auch als virtualisierte Hardware-Ressourcen ausgebildet ist, betrieben.

Container bzw. deren Prozesse bekommen zum Start der Containerinstanz Ausführungsprivilegien zugeordnet. Um die Durchführung erfolgreicher Angriffe zu vermeiden, können diese Ausführungsrechte von Applikationen minimiert werden, sodass dem Container lediglich die für den Betrieb der Applikation erforderlichen Rechte zugewiesen werden. Herkömmlicherweise werden zur Minimierung der Ausführungsrechte nurleseberechtigte Dateisysteme (readonly-Mounts) zugelassen oder eine verbindlichen Zugangskontrolle (Mandatory Access Control) für Dateisysteme eingerichtet. Für Container, die auf einem Linux Betriebssystem ausgebildet sind, können des Weiteren in der Containerinstanz betriebene Prozesse beispielsweise mit Hilfe von sogenannten "Capabilities" oder "Seccomp"-Profilen reduzierte Ausführungsprivilegien durch die Container-Laufzeitumgebung zugewiesen werden.

Sollen zu einem dedizierten Zeitpunkt innerhalb der Laufzeit eines Containers privilegierte Operationen bzw. Prozesse, der eine oder mehrere privilegierte Operationen umfasst, ausgeführt werden, entsteht nun das Problem, dass einmal abgegebene Prozessprivilegien nicht einfach wieder zugewiesen werden können. Soll beispielsweis während der Laufzeit einer Containerinstanz eine Software-Installation durchgeführt werden, benötigten die dazu notwendigen Operation von Anfang an die hierfür erforderlichen Rechte, wodurch die Anwendung zur Laufzeit nicht optimal geschützt werden kann.

Beispielsweise werden Containerinstanzen für unterschiedliche Nutzer auf dem gleichen Cluster betrieben. Ein Nutzer arbeitet hierbei auf seiner eigenen Container-Instanz, die ihm eine eigenständige Entwicklungsumgebung bereitstellt, in der beispielsweise Programm-Code entwickelt wird und Daten übersetzt werden. Zugriffsrechte innerhalb der Containerinstanz werden hierbei minimiert, um zu verhindern, dass ein Nutzer, der auf einer Containerinstanz arbeitet, aus dem Container ausbricht und somit Daten eines anderen Nutzers auslesen oder kompromittieren kann.
Möchte ein Kunde z.B. in seiner Instanz zur Laufzeit Entwicklungswerkzeuge nachinstallieren, sind im Vergleich zum Regelbetrieb erweiterte Berechtigungen für diese eher seltene und nicht regelmäßig stattfindende Aktion erforderlich.

Für privilegierte Operationen wäre es in diesem Falle wünschenswert, wenn die hierfür erforderlichen Privilegien nicht dauerhaft, sondern lediglich zeitlich begrenzt und ausschließlich für die durchzuführende Aufgabe temporär zugewiesen werden. Bei Bedarf sollen bei diesem Szenario privilegierte Operationen über die Laufzeit der Container-Instanz hinweg immer wieder in nicht regelmäßigen Abständen ausgeführt werden können.

Es ist somit eine Aufgabe der vorliegenden Erfindung, ein Verfahren zu schaffen, bei dem Ausführungsprivilegien zur Ausführung privilegierter Operationen während der Laufzeit einer Containerinstanz flexibel und zeitlich begrenzt erteilt werden können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum Ausführen von privilegierten Operationen eines in einem Container auf einem Gastrechner ausgeführten Anwendungsprogramms, bei der zum Ausführen der privilegierten Operation in Bezug auf nicht-privilegierte Operationen des Anwendungsprogramms eine erweiterte Ausführungsberechtigung für den Container auf einem Gastrechner erforderlich sind, umfassend
- Empfangen einer mindestens eine privilegierte Operation enthaltende Privilegierungsrichtline beim Starten eines Hauptcontainers in einem Gastrechner,
- Überwachen von aufgerufenen Operationen des Anwendungsprogramms, die in einem Hauptcontainer ausgeführt werden, durch eine Laufzeitumgebung des Gastrechners,
- Starten eines separaten, die erweiterte Ausführungsberechtigung umfassenden Nebencontainers, wenn eine in der Privilegierungsrichtlinie enthaltene privilegierte Operation innerhalb des Hauptcontainers aufgerufen wird,
- Ausführen der privilegierten Operation im Nebencontainer stellvertretend für den Hauptcontainer,
- Beenden des Nebencontainers nach Ausführung der privilegierten Operation, und
- Weiterführen des Hauptcontainers abhängig von einer Rückmeldung des Nebencontainers und/oder der Privilegierungsrichtlinie.

Dies ermöglicht es den Hauptcontainer, in dem das Anwendungsprogramm ausgeführt wird, mit lediglich nicht-erweiterter Ausführungsberechtigung zu betreiben. Somit sind Angriffsmöglichkeiten über den Hauptcontainer auf den Gastrechner und andere Container reduziert. Durch das kontinuierliche Überwachen der aufgerufenen Operationen können zu beliebigen Zeitpunkten während der gesamten Ausführungsdauer des Hauptcontainers privilegierte Operationen erkannt und Nebencontainer gestartet werden und somit Ausführungsprogramme mit beliebig vielen privilegierte Operationen verteilt über die Ausführungsdauer ausgeführt werden. Da die privilegierte Operation im Nebencontainer stellvertretend für den Hauptcontainer ausgeführt wird kann die nicht-erweiterte Ausführungsberechtigung im Hauptcontainer für die gesamte Laufzeit des Hauptcontainers unverändert beibehalten werden. Durch das Beenden des Nebencontainers nach Ausführung der privilegierten Operation wird eine Angriffsmöglichkeit über den Nebencontainer auf eine möglichst kurze Zeit beschränkt. Durch die Rückmeldung des Nebencontainers bzw. die Vorgaben in der Richtlinie kann der Hauptcontainer flexibel weitergeführt werden.

In einer vorteilhaften Ausführungsform enthält die Privilegierungsrichtlinie mindestens einen Übergabeparameter der privilegierten Operation und der Nebencontainer wird abhängig von dem mindestens einen Übergabeparameter gestartet.

Somit können privilegierte Operationen auf einen oder mehrere Übergabeparameter festgelegt werden und somit die Ausführung der privilegierten Operation auf diese Übergabeparameter beschränkt werden. Dadurch werden die Angriffsmöglichkeiten über den Nebencontainer auf den Gastrechner oder andere Container zuzugreifen reduziert.

In einer vorteilhaften Ausführungsform enthält die Privilegierungsrichtlinie zu einer privilegierten Operation mindestens eine der folgenden Angaben
- mindestens einen Ressourcenbereich des Gastrechners, der sowohl von dem Hauptcontainer als auch von dem Nebencontainer aus zugreifbar ist, und/oder
- eine dem Nebencontainer zuzuordnende erweiterte Ausführungsberechtigung, und/oder
- mindestens eine Betriebsoption eines Dateisystems im Nebencontainer, die von einer Betriebsoption des gleichen Dateisystems, das innerhalb des Hauptcontainers zugeordnet ist abweicht, und/oder
- eine Angabe zu einem dem Nebencontainer zugrundeliegenden Containerimage, und/oder
- eine Umleitungsoption für Ein- und Ausgaben, die eine Umleitung von Ein- und Ausgaben der in der Nebencontainerinstanz ausgeführte Operationen, an den Hauptcontainer veranlasst, und
wird der Nebencontainer abhängig von der mindestens einen Angabe ausgeführt.

Durch die Angaben in der Privilegierungsrichtlinie können die erweiterten Zugriffsberechtigungen sehr flexibel für verschiedene privilegierte Operationen eingestellt und somit optimiert auf den tatsächlichen Bedarf vorgegeben werden. Der Ressourcenbereich ist insbesondere ein Linux-spezifischer Namespace, der zur Isolierung von Ressourcen, beispielsweise von Prozessen, Speicherbereichen bzw. Dateisystemen oder auch Netzwerken der Container auf dem Gastrechner dient.

In einer vorteilhaften Ausführungsform enthält die Privilegierungsrichtlinie ein in der Nebencontainerinstanz auszuführendes Programm, bevorzugt mit Parametern des Programms.

Dies ermöglicht es zusätzliche Programme, die im Zusammenhang mit der privilegierten Operation und mit den gleichen Ausführungsberechtigungen ausgeführt werden sollen, zu spezifizieren und zur Ausführung zu bringen. Dadurch können auch die privilegierten Operationen flexibel und unabhängig vom Anwendungsprogramm im Container erweitert werden.

In einer vorteilhaften Ausführungsform enthält die Privilegierungsrichtlinie spezifisch für die privilegierte Operation einen Abarbeitungsmodus für das den Nebencontainer initiierende Anwendungsprogramm im Hauptcontainer während der Ausführung des Nebencontainers.

Somit kann die Abarbeitung des Anwendungsprogramms im Hauptcontainer spezifisch und somit flexibel für die privilegierte Operation durch die Privilegierungsrichtlinie festgelegt werden. Dabei können mehrere spezifische Abarbeitungsmodi für unterschiedliche privilegierte Operationen den gleichen Abarbeitungsmodus angeben.

In einer vorteilhaften Ausführungsform wird die Privilegierungsrichtline kryptographisch geschützt an den Gastrechner übergeben.

Durch eine kryptographische Signatur der Privilegierungsrichtlinie werden die Möglichkeiten einer Manipulation der Privilegierungsrichtlinie reduziert und eine Überprüfung des Erstellers der Richtlinie ermöglicht. Dadurch wird eine unterschiedliche Verwendung abhängig vom Ersteller der Privilegierungsrichtlinie erreicht.

In einer vorteilhaften Ausführungsform sind die Ergebnisse aus der im Nebencontainer ausgeführten privilegierten Operation im Hauptcontainer wirksam.

In einer vorteilhaften Ausführungsform wird die Privilegierungsrichtlinie durch eine Privileg-Steuereinheit ausgewertet und das Starten, Ausführen und Beenden des Nebencontainers abhängig von den Vorgaben der Privilegierungsrichtlinie durch die Privileg-Steuereinheit durchgeführt, wobei die Privileg-Steuereinheit als eine Erweiterung in der Laufzeitumgebung des Gastrechners oder in einem eigenständigen Dienst auf dem Betriebssystem ausgebildet ist.

Ist die Privileg-Steuereinheit als Erweiterung der Container-Laufzeitumgebung ausgebildet, wird sie von einer entsprechenden Hauptanwendung während der Laufzeit eingebunden. Eine solche Ausbildung wird als Plug-in bezeichnet. Eine Ausbildung als Plug-in hat den Vorteil, dass die Laufzeitumgebung direkt die Privileg-Steuereinheit benachrichtigen kann und gegebenenfalls auch direkt Meta-Informationen zu den Containern bereitstellen kann. Die Privileg-Steuereinheit kann aber auch in einem eigenständigen Dienst auf dem Betriebssystem, beispielsweise einem "Daemon" ausgebildet sein. Der eigenständige Dienst ist nochmals von der Laufzeitumgebung separiert. Ein Angreifer der Laufzeitumgebung kann hierbei nicht die Privileg-Steuereinheit kompromittieren, sofern hierfür unterschiedliche nicht-privilegierte Benutzer verwendet werden.

In einer vorteilhaften Ausführungsform werden die aufgerufenen Operationen des Anwendungsprogramms durch eine Prozessüberwachungseinheit, die in der Laufzeitumgebung des Gastrechners angeordnet ist, überwacht, und die Prozessüberwachungseinheit wird von der Privileg-Steuereinheit gesteuert. In einer vorteilhaften Ausführungsform wird ein Ressourcen-getrennter Nebencontainer, der zur Ausführung der privilegierten Operation keinen Ressourcenbereich mit dem Hauptcontainer teilt, abhängig von der Privilegierungsrichtlinie auf einem vom Gastrechner des Hauptcontainers unterschiedlichen Neben-Gastrechner ausgeführt.

Der Ressourcen-getrennte Nebencontainer ist im Gegensatz zu einem Nebencontainer, der Ressourcen, d.h. Namespaces mit dem Hauptcontainer teilt, muss nicht notwendigerweise auf dem gleichen Hostrechner ausgeführt werden und ermöglicht somit privilegierte Operationen in einen komplexen Gastrechner-Netzwerk auszuführen. Der Ressourcen-getrennte Nebencontainer kann auch auf dem gleichen Hostrechner wie der Hauptcontainer ausgeführt werden. Insbesondere kann der Neben-Gastrechner gesichert ausgebildet sein.

In einer vorteilhaften Ausführungsform wird die Privilegierungsrichtlinie einer Orchestrierungseinheit bereitgestellt, und der Ressourcen-getrennte Nebencontainer wird durch die Orchestrierungseinheit gestartet.

Dies ermöglicht eine Steuerung des Haupt- und Nebencontainers durch die Orchestrierungseinheit und somit eine Verwendung in einer komplexen orchestrierten Umgebung, die mehrere Gastrechner und die Orchestrierungseinheit umfasst.

In einer vorteilhaften Ausführungsform werden Nachrichten zur Steuerung eines Ressourcen-getrennten Nebencontainers, der auf einem vom Gastrechner des Hauptcontainer unterschiedlichen Nebengastrechner ausgeführt wird, über die Orchestrierungseinheit zwischen der Privileg-Steuereinheit auf dem Gastrechner des Hauptcontainers und dem Neben-Gastrechner ausgetauscht.

Somit ist keine direkte Kommunikationsverbindung zwischen dem Gastrechner des Hauptcontainers und dem Neben-Gastrechner notwendig. Die Orchestrierungseinheit kann in die Steuerung des Nebencontainers eingebunden und abhängig von beispielsweise abhängig von der Auslastung der Gastrechner die Kommunikation beeinflussen oder die Auswahl des auch den Neben-Gastrechner beeinflussen.

Ein zweiter Aspekt der Erfindung betrifft ein System zum Ausführen von privilegierten Operationen eines in einem Container auf einem Gastrechner ausgeführten Anwendungsprogramms, bei der zum Ausführen der privilegierten Operation in Bezug auf nicht-privilegierte Operationen des Anwendungsprogramms erweiterte Ausführungsberechtigungen für den Container auf einem Gastrechner erforderlich sind, umfassend einen Gastrechner sowie optional eine Orchestrierungseinheit, die derart ausgebildet sind,
- eine mindestens eine privilegierte Operation enthaltende Privilegierungsrichtline beim Starten eines Hauptcontainers an im Gastrechner zu empfangen,
- aufgerufene Operationen des Anwendungsprogramms, die in einem Hauptcontainer ausgeführt werden, durch eine Laufzeitumgebung des Gastrechners zu überwachen,
- einen separaten, die erweiterte Ausführungsberechtigung umfassenden Nebencontainer zu starten, wenn eine in der Privilegierungsrichtlinie enthaltene privilegierte Operation innerhalb des Hauptcontainers aufgerufen wird,
- die privilegierte Operation im Nebencontainer stellvertretend für den Hauptcontainer auszuführen,
- den Nebencontainers nach Ausführung der privilegierten Operation zu beenden, und
- den Hauptcontainer abhängig von einer Rückmeldung des Nebencontainers und/oder der Privilegierungsrichtlinie weiterzuführen.

Durch das erfindungsgemäße System können der mindestens eine Gastrechner bzw. die auf dem System ausgeführten Container optimiert vor Angriffen geschützt werden, da erweitert Ausführungsberechtigungen nur temporär für Nebencontainer erteilt werden. Erweiterte Ausführungsberechtigungen können flexibel und spezifisch für verschiedene privilegierte Operationen den Nebencontainern erteilt werden.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "empfangen", "überwachen", "starten", "ausführen", und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliege können, beispielsweise als elektrische Impulse. Das System und darin enthaltene Gastrechner und Orchestrierungseinheiten und dergleichen kann bzw. können einen oder mehrere Prozessoren umfassen.

Ein Computerprogrammprodukt, wie z. B. ein Computerprogrammmittel, kann beispielsweise als Speichermedium, wie z. B. Speicherkarte, USB-Stick, CD-ROM, DVD oder auch in Form einer herunterladbaren Datei von einem Server in einem Netzwerk bereitgestellt oder geliefert werden. Dies kann z. B. in einem drahtlosen Kommunikationsnetzwerk durch die Übertragung einer entsprechenden Datei auf das Computerprogrammprodukt oder dem Computerprogrammmittel erfolgen.

Ausführungsbeispiele des erfindungsgemäßen Verfahrens und der erfindungsgemäßen Anordnung sind in den Zeichnungen beispielhaft dargestellt und werden anhand der nachfolgenden Beschreibung näher erläutert. Es zeigen:
- Fig. 1: ein Ausführungsbeispiel des erfindungsgemäßen Verfahrens als Ablaufdiagramm;
- Fig. 2: ein erstes Ausführungsbeispiel der erfindungsgemäßen Systems mit einem Gastrechner mit einem Hauptcontainer und einem Nebencontainer in schematischer Darstellung;
- Fig. 3: ein zweites Ausführungsbeispiel der erfindungsgemäßen Systems mit einem Gastrechner mit einem Hauptcontainer und einem Ressourcen-getrennten Nebencontainer in schematischer Darstellung; und
- Fig. 4: ein drittes Ausführungsbeispiel des erfindungsgemäßen Systems mit zwei Gastrechnern und einer Orchestrierungseinheit in schematischer Darstellung.

Einander entsprechende Teile sind in allen Figuren mit den gleichen Bezugszeichen versehen.

Zur Ausführung einer Anwendung, genauer eines Anwendungsprogramms, in einer Container-virtualisierten Umgebung wird das Anwendungsprogramm in mindestens einem Container auf einer Containerlaufzeitumgebung eines Gastrechners ausgeführt. Eine Anwendung könnte beispielsweise eine Entwicklungsplattform sein, bei der Container für unterschiedliche Nutzer auf einem Gastrechner oder mehreren Gastrechnern, die zusammen ein Cluster bilden, betrieben werden. Jeder Nutzer arbeitet hierbei auf seiner eigenen Containerinstanz, die ihm eine eigenständige Entwicklungsumgebung bereitstellt, in der Programm-code entwickelt wird und Daten übersetzt werden. Ausführungsrechte innerhalb der Containerinstanz werden hierbei minimiert, um zu verhindern, dass ein Nutzer, der auf einer Containerinstanz arbeitet, aus der Containerinstanz ausbricht und somit Daten eines anderen Nutzers auslesen oder kompromittieren kann.

Möchte ein Nutzer in seiner Containerinstanz zur Laufzeit beispielsweise Entwicklungswerkzeuge nachinstallieren, sind im Vergleich zum Regelbetrieb erweiterte Berechtigungen für diese eher seltene und nicht regelmäßig stattfindende Aktion erforderlich.

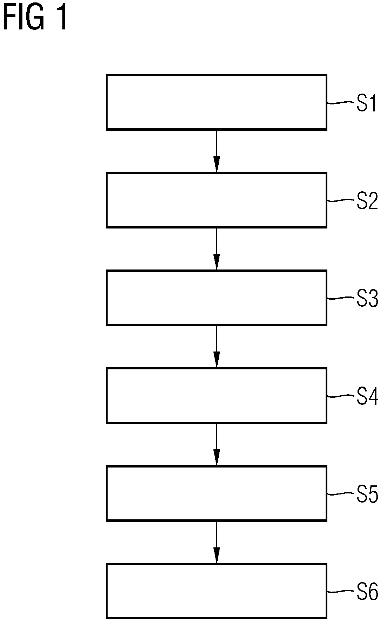

Zur Ausführung einer solchen Aktion sind eine oder mehrere privilegierte Operationen auszuführen, die eine erweiterte Ausführungsberechtigung in Bezug auf nicht-privilegierte Operationen des Anwendungsprogramms auf dem Gastrechner erfordern. Um die Ausführungsrechte der Containerinstanz minimiert zu halten und dennoch die privilegierten Operationen ausführen zu können wird das folgende Verfahren vorgeschlagen und anhand von Fig. 1 nachfolgend beschrieben.

Hierzu wird eine Privilegierungsrichtline, die die mindestens eine privilegierte Operation bevorzugt mit Übergabeparametern enthält, erstellt und beim Starten einer Containerinstanz, die im weiteren als Hauptcontainer bezeichnet wird, im Gastrechner empfangen, siehe Verfahrensschritt S1. Im Verfahrensschritt S2 werden die anschließend während der Ausführung des Hauptcontainers aufgerufenen Operationen des Anwendungsprogramms durch die Laufzeitumgebung des Gastrechners überwacht. Wird eine in der Privilegierungsrichtlinie enthaltene privilegierte Operation innerhalb des Hauptcontainers aufgerufen, wird ein separater Nebencontainer mit erweiterten Ausführungsberechtigungen entsprechend der Privilegierungsrichtlinie gestartet, siehe Verfahrensschritt S3. Der Nebencontainer ist höher privilegiert bzw nicht so eingeschränkt wie der Hauptcontainer.

Die privilegierte Operation wird anschließend im Nebencontainer stellvertretend für den Hauptcontainer ausgeführt, siehe Verfahrensschritt S4. Nach Ausführung der privilegierten Operation der wird der Nebencontainer beendet, siehe Verfahrensschritt S5 und der Hauptcontainers abhängig von einer Rückmeldung des Nebencontainers und/oder der Privilegierungsrichtlinie weitergeführt, siehe Verfahrensschritt S6. Im Gegensatz zur im Hauptcontainer betriebenen Anwendung wird der Nebencontainer nicht für den Nutzer bzw. andere Dienste, die die Funktionalität des Hauptcontainers nutzen, bereitgestellt. Er führt somit lediglich als Stellvertreter eine für den Hauptcontainer erforderliche Operation aus.

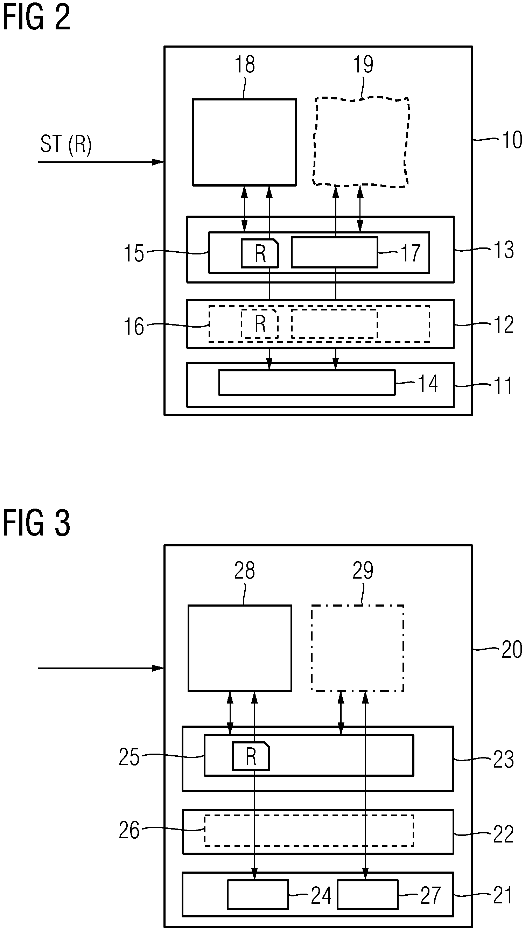

Zur Verdeutlichung der unterschiedlichen beteiligten Hardware Komponenten ist in Fig. 2 ein System dargestellt, das derart konfiguriert ist, um das Verfahren durchzuführen.

Das System umfasst einen Gastrechner 10 mit Ressourcen 11, beispielsweise mindestens einem Prozessor, einer Speichereinheit, Netzwerkschnittstellen und dergleichen. Der Gastrechner 10 umfasst ein Betriebssystem 12 das den Zugriff auf die Ressourcen 11 steuert und auf dem eine Container-Laufzeitumgebung 13 zur Steuerung von Containern eingerichtet ist. Der Gastrechner 10 umfasst des Weiteren mindestens eine interne oder externe Ein- und Ausgabeschnittstelle, nicht explizit dargestellt, über die die Privilegierungsrichtlinie R und/oder ein dem Container zugrunde liegendes Containerimage und/oder eine Aufforderung ST (R) zum Start des Containers empfangbar ist. Der Gastrechner 10 zeigt einen Hauptcontainer 18 sowie einen Nebencontainer 19, der ein Bezug auf den Hauptcontainer 18 erweiterte Ausführungsberechtigungen umfasst und die privilegierte Operation stellvertretend für den Hauptcontainer 18 ausführt.

In der Privilegierungsrichtlinie R kann neben den privilegierten Operationen und deren Übergabeparameter zusätzlich spezifiziert sein, welche Ressourcenbereiche 14 der Hauptcontainer 18 mit dem Nebencontainer 19 teilt. Dazu enthält die Privilegierungsrichtlinie R mindestens einen Ressourcenbereich des Gastrechners, der sowohl von dem Hauptcontainer als auch von dem Nebencontainer aus zugreifbar ist. Die Privilegierungsrichtlinie R enthält die dem Nebencontainer 19 zuzuordnende erweiterte Ausführungsberechtigung mindestens eine Betriebsoption des Dateisystems im Nebencontainer 19, beispielsweise nur-lesender Zugriff, die von einer Betriebsoption des gleichen Dateisystems im Hauptcontainer 18, beispielsweise schreibender Zugriff, abweicht. In der Privilegierungsrichtlinie R kann spezifiziert sein, dass Ein- und Ausgaben des Nebencontainers 19 an den Hauptcontainer 18 umgeleitet werden und diese im Hauptcontainer 18 verarbeitet werden.

Des Weiteren kann die Privilegierungsrichtlinie R eine Angabe zu einem dem Nebencontainer 19 zugrundeliegenden Containerimage enthalten. Dadurch kann spezifiziert werden, ob der Nebencontainer 19 mit dem gleichen Containerimage wie der Hauptcontainer 18 jedoch mit erweiterten Ausführungsberechtigungen gestartet wird oder mit einem davon unterschiedlichen Containerimage gestartet wird. Beispielsweise wird als Standard-Konfiguration der Nebencontainer 19 mit dem gleichen Containerimage wie der Hauptcontainer 18 gestartet.

Optional kann neben der privilegierten Operation ein auszuführendes Programm mit Parameter des Programms in der Privilegierungsrichtlinie R spezifiziert werden. In diesem Fall wird das Programm in dem für die Operation gestarteten Nebencontainer 19 mit den für die Operation, in der der Privilegierungsrichtlinie R angegebenen, erweiterten Ausführungsprivilegien ausgeführt.

Die Privilegierungsrichtlinie kann spezifisch für die privilegierte Operation einen Abarbeitungsmodus für das Anwendungsprogramm im Hauptcontainer 19 während der Ausführung des Nebencontainers 19 enthalten. Ein Abarbeitungsmodus kann sein, dass das eigentliche Anwendungsprogramm, welches den Nebencontainer 19 initiiert, während der Ausführung des Nebencontainers 19 angehalten wird. Dem Nutzer kann gegebenenfalls eine Ein-/Ausgabe und eine Rückmeldung, auch Return Code bezeichnet, des Nebencontainers 19 mitgeteilt werden. Der Hauptcontainer 18 beendet sich daraufhin. Ein weiterer Abarbeitungsmodus gibt an, dass das Anwendungsprogramm im Hauptcontainer 18 angehalten und nach der Ausführung des Nebencontainers 19 eigenständig weitergeführt wird. Ein weiterer Abarbeitungsmodus gibt an, dass das Anwendungsprogramm im Hauptcontainer 18 und die privilegierte Operation im Nebencontainer 19 parallel ausgeführt werden.

Zusätzlich kann die der Privilegierungsrichtlinie R zum Schutz vor unberechtigter Änderung mit Hilfe einer digitalen Signatur integritätsgesichert werden.

Die der Privilegierungsrichtlinie R wird durch eine Privileg-Steuereinheit 15 ausgewertet. Des Weiteren steuert die Privileg-Steuereinheit 15 das Starten, Ausführen und Beenden des Nebencontainers 19 abhängig von der Privilegierungsrichtlinie R. Die Privileg-Steuereinheit 15 ist beispielsweise als eine Erweiterung in der Laufzeitumgebung 13 des Gastrechners 10 oder in einem eigenständigen Dienst 16 auf dem Betriebssystem 12 des Gastrechners 10 ausgebildet. Es wird angenommen, dass die Container-Laufzeitumgebung 13 vertrauenswürdig ist.

Die aufgerufenen Operationen des Anwendungsprogramms werden durch eine Prozessüberwachungseinheit 17 überwacht. Die Prozessüberwachungseinheit 17 ist in der Laufzeitumgebung 13 des Gastrechners 10 angeordnet und wird von der Privileg-Steuereinheit 15, 16 gesteuert. Die Prozessüberwachungseinheit 17 umfasst beispielsweise ein hierfür entwickeltes Kernel Modul oder ein spezifisches Filterprogramm wie beispielsweise ein erweitertes Berkley Packet Filter (eBPF)-Programm. Die Privileg-Steuereinheit 15, 16 parametriert hierfür das Kernel Modul bzw. die eBPF-Schnittstelle in der Prozessüberwachungseinheit 17.

Wird eine Operation bzw. ein Prozess, welcher privilegiert ausgeführt werden soll, mit Hilfe des Kernel-Moduls oder eines eBPF-Programms erkannt, wird dessen Ausführung im Hauptcontainer durch die Privileg-Steuereinheit 15, 16, sofern in der der Privilegierungsrichtlinie R spezifiziert, verhindert oder, sofern ein auszuführendes Programm spezifiziert wurde, verzögert. Der Prozess bleibt verbleibt hierbei innerhalb des Hauptcontainers 18 im wartenden Zustand. Gleichzeitig wird durch die Privileg-Steuereinheit 15, 16 der Nebencontainer 19, wie in der Richtlinie spezifiziert, mit den erforderlichen Privilegien gestartet und die definierten gemeinsamen Ressourcen 14, d.h. Namespaces, geteilt. Sofern Mount-Optionen, d.h. Optionen für eingebundene Dateisysteme bzw. Speicherbereiche, geändert werden sollen, werden die zu ändernden Mounts gemäß der der Privilegierungsrichtlinie R in einem neuen Mount-Namespace eingehängt. Im Hauptcontainer 18 verbleibt somit das Dateisystem z.B. auf readonly stehen, im Nebencontainer 19 kann dieses schreibend eingehängt und kann somit geändert werden. Die Änderungsoperationen sind nach durchgeführten Änderungen ebenfalls im Hauptcontainer sichtbar.

Ein- und Ausgaben eines im Nebencontainer 19 ausgeführten Anwendungsprogramms können mit Hilfe der Container-Laufzeitumgebung 13 und mit Hilfe von Ein-/Ausgabeumleitungen an den hängenden Prozess im Hauptcontainer 18 umgeleitet werden. Somit kann der Benutzer, der das Anwendungsprogramm ausführt, wie gewohnt Operationen ausführen, ohne zu bemerken, dass die Operation in einem Nebencontainer 19 ausgeführt wurde. Die Umleitung der Ausgabe kann bei der innerhalb des Gastrechners beispielsweise über eine Stream-Umleitung von Ein-/Ausgabekanälen erfolgen. Werden Haupt- und Nebencontainer auf unterschiedlichen Gastrechnern ausgeführt, muss erst ein sicherer Kommunikationskanal aufgebaut werden, in dem die Ein-/Ausgaben vom Nebencontainer übertragen werden. Dies ist wichtig, damit der Nutzer informiert wird, ob das Kommando erfolgreich ausgeführt wird und - sofern im privilegierten Nebencontainer programmspezifische Eingaben erforderlich sind - dem Nutzer die Möglichkeit gegeben wird, diese im privilegierten Container auszuführen. Ist das Anwendungsprogramm ausgeführt und der temporäre Nebencontainer 19 beendet, wird das im Hauptcontainer 18 ausgeführte Programm entweder ebenfalls beendet und mit dem Return-Code des temporären Nebencontainers an den Benutzer zurückgemeldet oder - sofern es in der Richtlinie spezifiziert wurde, anschließend ausgeführt.

In einer Ausführungsvariante kann zwischen Hauptcontainer und Nebencontainer kein Ressourcenbereich, insbesondere keine Linux-Namespaces geteilt werden. Ein entsprechendes System mit entsprechendem Haupt- und Nebencontainer ist in Fig. 3 dargestellt. Es umfasst einen Hostrechner 20 der entsprechend dem Hostrechner 10 in Fig. 10 aufgebaut ist. Der Nebencontainer, der keine Ressourcenbereiche mit dem Hauptcontainer 28 teilt wird als Ressourcen-getrennter Nebencontainer 29 bezeichnet. Dabei ist dem Hauptcontainer 28 ein Ressourcenbereich 24, dem Ressourcen-getrennten Nebencontainer 29 ein Ressourcenbereich 27, der keine Überschneidung mit dem Ressourcenbereich 24 aufweist, zugewiesen. Der Ressourcen-getrennte Nebencontainer 29 wird durch eine Operation im Hauptcontainer 28, welche in der der Privilegierungsrichtlinie R spezifiziert ist, getriggert.

Bei der Verwendung von Ressourcen-getrennten Nebencontainer 29 ist es in einer orchestrierten Umgebung möglich, dass unter Verwendung einer Orchestrierungseinheit, definierte Operationen in einem Ressourcen-getrennten Nebencontainer auf einem vom Gastrechner des Hauptcontainers unterschiedlichen Neben-Gastrechner ausgeführt werden.

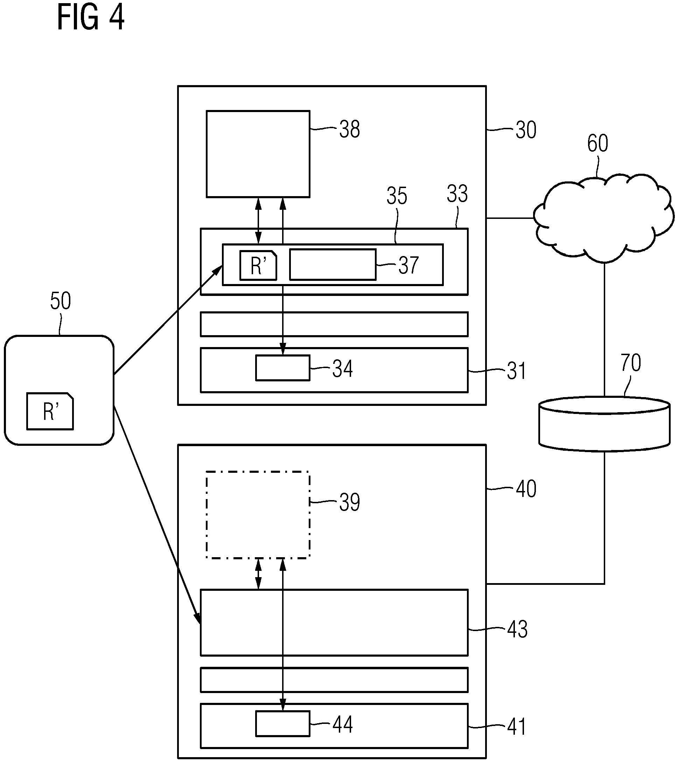

Fig. 4 zeigt ein System mit zwei Gastrechnern, dem Gastrechner 30, auf dem der Hauptcontainer 38 ausgeführt wird sowie einem Neben-Gastrechner 40, auf dem der Ressourcen-getrennte Nebencontainer 39 ausgeführt wird. Dem Hauptcontainer 38 ist ein Ressourcenbereich 34 aus den Ressourcen 31 des Gastrechners 30 zugewiesen, dem Nebencontainer 39 ist ein davon unterschiedlicher Ressourcenbereich 44 aus den Ressourcen 41 des Nebengastrechners 40 zugewiesen.

Das System umfasst des Weiteren eine Orchestrierungseinheit 50, auf der die der Privilegierungsrichtlinie R' angeordnet ist. Die auf dem Ressourcen-getrennten Nebencontainer auszuführende mindestens eine Operation wird mit Hilfe zusätzlicher Informationen innerhalb der Privilegierungsrichtlinie R' angegeben. Die Orchestrierungseinheit 50 übermittelt dem Gastrechner 30 die Privilegierungsrichtlinie R' oder eine Teilmenge davon. Eine Privileg-Steuereinheit 35 überwacht abhängig von der Privilegierungsrichtlinie R' die ausgeführten Operationen des Hauptcontainers 38. Die Orchestrierungseinheit 50 übermittelt Nachrichten zur Steuerung eines Ressourcen-getrennten Nebencontainers 39 zwischen einer Privileg-Steuereinheit 37 auf dem Gastrechner 30 des Hauptcontainers 38 und dem Neben-Gastrechner 40.

Der Hauptcontainer 30 wird beispielsweise auf dem Gastrechner 30 ausgeführt, der mit einem Datennetzwerk 60, beispielsweise dem Internet, verbunden ist. Der Gastrechner 30 bindet ein für alle Gastrechner 30, 40 im System verfügbares Dateisystem 70 ein, welches jedoch nur auf speziellen, geschützt implementierten Gastrechner, hier Neben-Gastrechner 40 geändert werden darf. Der Zugriff auf den Neben-Gastrechner 40 kann beispielsweise nur über eine Firewall-Komponente ermöglicht sein. Der Neben-Gastrechner kann des Weiteren Software- oder Hardware-basierte Schutzmechanismen, beispielsweise Tamper-Schutz, umfassen.

In diesem Fall interagiert die Privileg-Steuereinheit 35 nicht mit der lokalen Container-Laufzeitumgebung 35 des Gastrechners 30, sondern mit der Orchestrierungseinheit 50. Die Orchestrierungseinheit 50 steuert, dass der, durch eine privilegierte Operation im Hauptcontainer 38 getriggerte Ressourcen-getrennte Nebencontainer 39 auf dem gesicherten Neben-Gastrechner 40 erzeugt und ausgeführt wird. Die Ausführung des initiierenden Programms im Hauptcontainer 38 auf dem Gastrechner 30 wird durch die Orchestrierungseinheit beispielsweise verzögert oder unterbunden. Über die Orchestrierungseinheit 50 bzw. über eine Orchestrierungsschnittstelle werden gegebenenfalls Ein- und Ausgaben des Nebencontainers 39 an den Hauptcontainer 38 übergeben.

Durch das beschriebene Verfahren und System benötigt der Hauptcontainer nicht erhöhte Ausführungsberechtigungen, sofern privilegierte Operationen für den Hauptcontainer ausgeführt werden sollen. Auf Basis von Ereignissen innerhalb des Hauptcontainers können privilegierte Operationen innerhalb eines separaten Nebencontainers durchgeführt werden. Es können einzelne Operationen mit entsprechenden Parametern privilegiert ausgeführt werden. Für unterschiedliche Parametrierungen der Trigger-Operationen innerhalb des Hauptcontainers können auch unterschiedliche Nebencontainer-Instanzen gestartet werden. Prinzipiell können mit einer privilegierten Operation auch mehrere Nebencontainer gestartet werden, die unterschiedlich privilegiert sind. Hierfür müssen dann für mehrere Parameter einer Operation unterschiedliche Aktionen hinterlegt werden. Z.B. Operation -a -b -c startet drei Nebencontainer, wenn für die Parameter -a, -b und -c unterschiedliche Aktionen hinterlegt sind. In der erweiterten, orchestrierten Variante können sicherheitskritische Operationen, beispielsweise durch die Verwendung von Node-Selektoren auf speziell gesicherten Gastrechnern ausgeführt werden.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum Ausführen von privilegierten Operationen eines in einem Container auf einem Gastrechner (10) ausgeführten Anwendungsprogramms, bei dem zum Ausführen der privilegierten Operation in Bezug auf nicht-privilegierte Operationen des Anwendungsprogramms eine erweiterte Ausführungsberechtigung für den Container auf einem Gastrechner (10) erforderlich sind, umfassend
- Empfangen (S1) einer mindestens eine privilegierte Operation enthaltende Privilegierungsrichtline (R) beim Starten eines Hauptcontainers (18) in einem Gastrechner (10),
- Überwachen (S2) von aufgerufenen Operationen des Anwendungsprogramms, die in dem Hauptcontainer (18) ausgeführt werden, durch eine Laufzeitumgebung (13) des Gastrechners (10),
- Starten (S3) eines separaten, die erweiterte Ausführungsberechtigung umfassenden Nebencontainers (19), wenn eine in der Privilegierungsrichtlinie (R) enthaltene privilegierte Operation innerhalb des Hauptcontainers (18) aufgerufen wird,
- Ausführen (S4) der privilegierten Operation im Nebencontainer (18) stellvertretend für den Hauptcontainer (18),
- Beenden (S5) des Nebencontainers (19) nach Ausführung der privilegierten Operation, und
- Weiterführen (S6) des Hauptcontainers (18) abhängig von einer Rückmeldung des Nebencontainers (19) und/oder der Privilegierungsrichtlinie (R).

2. Verfahren nach Anspruch 1, wobei die Privilegierungsrichtlinie (R) mindestens einen Übergabeparameter der privilegierten Operation enthält und der Nebencontainer (19) abhängig von dem mindestens einen Übergabeparameter gestartet wird.

3. Verfahren nach einem der vorangehenden Ansprüche, wobei die Privilegierungsrichtlinie (R) zu einer privilegierten Operation mindestens eine der folgenden Angaben enthält
- mindestens einen Ressourcenbereich des Gastrechners (10), der sowohl von dem Hauptcontainer (18) als auch von dem Nebencontainer (19) aus zugreifbar ist,
- eine dem Nebencontainer (19) zuzuordnende erweiterte Ausführungsberechtigung,
- mindestens eine Betriebsoption eines Dateisystems im Nebencontainer (19), die von einer Betriebsoption des gleichen Dateisystems, das innerhalb des Hauptcontainers (18) zugeordnet ist, abweicht, und/oder
- eine Umleitungsoption für Ein- und Ausgaben, die eine Umleitung von Ein- und Ausgaben der in dem Nebencontainer (19) ausgeführte Operationen, an den Hauptcontainer (18) veranlasst, und
der Nebencontainer (19) abhängig von der mindestens einen Angabe ausgeführt wird.

4. Verfahren nach einem der vorangehenden Ansprüche, wobei die Privilegierungsrichtlinie (R) eine Angabe zu einem dem Nebencontainer (19) zugrundeliegenden Containerimage enthält.

5. Verfahren nach einem der vorangehenden Ansprüche, wobei die Privilegierungsrichtlinie (R) ein in dem Nebencontainer (19) auszuführendes Programm, bevorzugt mit Parametern des Programms enthält.

6. Verfahren nach einem der vorangehenden Ansprüche, wobei die Privilegierungsrichtlinie (R) spezifisch für die privilegierte Operation einen Abarbeitungsmodus für das den Nebencontainer (19) initiierende Anwendungsprogramm im Hauptcontainer (18) während der Ausführung des Nebencontainer (19) enthält.

7. Verfahren nach einem der vorangehenden Ansprüche, wobei die Privilegierungsrichtline (R) kryptographisch geschützt an den Gastrechner (10) übergeben wird.

8. Verfahren nach einem der vorangehenden Ansprüche, wobei Ergebnisse aus der im Nebencontainer (19) ausgeführten privilegierten Operation im Hauptcontainer (18) wirksam sind.

9. Verfahren nach einem der vorangehenden Ansprüche, wobei die Privilegierungsrichtlinie (R) durch eine Privileg-Steuereinheit (17) ausgewertet, und das Starten, Ausführen und Beenden des Nebencontainers (19) abhängig von der Privilegierungsrichtlinie (R) durch eine Privileg-Steuereinheit (15, 16) durchgeführt wird, wobei die Privileg-Steuereinheit (15, 16) als eine Erweiterung in der Laufzeitumgebung (13) des Gastrechners (10) oder in einem eigenständigen Dienst auf dem Betriebssystem (12) ausgebildet ist.

10. Verfahren nach einem der vorangehenden Ansprüche, wobei die aufgerufenen Operationen des Anwendungsprogramms durch eine Prozessüberwachungseinheit (17), die in der Laufzeitumgebung (13) des Gastrechners (10) angeordnet ist, überwacht werden und die Prozessüberwachungseinheit (17) von der Privileg-Steuereinheit (15, 16) gesteuert wird.

11. Verfahren nach einem der vorangehenden Ansprüche, wobei ein Ressourcen-getrennter Nebencontainer (39), der zur Ausführung der privilegierten Operation keinen Ressourcenbereich mit dem Hauptcontainer (38) teilt, abhängig von der Privilegierungsrichtlinie (R') auf einem vom Gastrechner (30) des Hauptcontainers (38) unterschiedlichen Neben-Gastrechner (40) ausgeführt wird.

12. Verfahren nach Anspruch 11, wobei die Privilegierungsrichtlinie (R') einer Orchestrierungseinheit (50) bereitgestellt wird, und der Ressourcen-getrennte Nebencontainer (39) durch die Orchestrierungseinheit (50) gestartet wird.

13. Verfahren nach einem der Ansprüche 8, 9 bis 11, wobei Nachrichten zur Steuerung eines Ressourcen-getrennten Nebencontainers (39), der auf einem vom Gastrechner (30) des Hauptcontainer (38) unterschiedlichen Nebengastrechner (40) ausgeführt wird, über die Orchestrierungseinheit (50) zwischen der Privileg-Steuereinheit (35) auf dem Gastrechner (30) des Hauptcontainers (38) und dem Neben-Gastrechner (40) austauscht werden.

14. System zum Ausführen von privilegierten Operationen eines in einem Container auf einem Gastrechner ausgeführten Anwendungsprogramms, bei der zum Ausführen der privilegierten Operation in Bezug auf nicht-privilegierte Operationen des Anwendungsprogramms erweiterte Ausführungsberechtigungen für den Container auf einem Gastrechner erforderlich sind, umfassend mindestens einen Gastrechner (10, 20, 30, 40) sowie optional eine Orchestrierungseinheit (50), die derart ausgebildet sind,
- eine mindestens eine privilegierte Operation enthaltende Privilegierungsrichtline (R, R') beim Starten eines Hauptcontainers (18, 28, 38) an im Gastrechner (10, 20, 30) zu empfangen,
- aufgerufene Operationen des Anwendungsprogramms, die in einem Hauptcontainer (18, 28, 38) ausgeführt werden, durch eine Laufzeitumgebung (13, 23, 33) des Gastrechners (10, 20, 30) zu überwachen,
- einen separaten, die erweiterte Ausführungsberechtigung umfassenden Nebencontainer (19, 29, 39) zu starten, wenn eine in der Privilegierungsrichtlinie (R, R') enthaltene privilegierte Operation innerhalb des Hauptcontainers (18, 28, 38) aufgerufen wird,
- die privilegierte Operation im Nebencontainer (19, 29, 39) stellvertretend für den Hauptcontainer (18, 28, 38) auszuführen,
- den Nebencontainer (19, 29, 39) nach Ausführung der privilegierten Operation zu beenden, und
- den Hauptcontainer (18, 28, 38) abhängig von einer Rückmeldung des Nebencontainers (19, 29, 39) und/oder der Privilegierungsrichtlinie (R, R') weiterzuführen.

15. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens nach einem der Ansprüche 1 bis 13 durchzuführen.
